# EUROPEAN PATENT SPECIFICATION

(11) **EP 2 645 153 B1**
(45) Date of publication and mention of the grant of the patent: **26.09.2018**
(21) Application number: 11843470.3
(22) Date of filing: 25.11.2011
(51) Int. Cl.: G02C 5/22, G02C 5/14, G02C 1/06

(54) **STRUCTURE FOR COUPLING TOGETHER A FRAME AND A SIDEPIECE OF EYEGLASSES**
STRUKTUR ZUR ZUSAMMENFÜGUNG EINES RAHMENS UND EINES SEITENBÜGELS EINER BRILLE
STRUCTURE POUR COUPLER L'UNE À L'AUTRE UNE MONTURE ET UNE PIÈCE LATÉRALE DE LUNETTES

(30) Priority: 26.11.2010 KR 20100118424; 23.11.2011 KR 20110122890
(43) Date of publication of application: 02.10.2013
(73) Proprietor: Kim, Young Ho, Gyeongsan-si, Gyeongsangbuk-do 712-844 (KR)
(72) Inventor: Kim, Young Ho, Gyeongsan-si, Gyeongsangbuk-do 712-844 (KR)
(74) Representative: Cabinet Chaillot
(86) International application number: PCT/KR2011/009062
(87) International publication number: WO 2012/070907

(56) References cited:
- JP-A- 2001 100 159
- JP-A- 2003 215 506
- JP-A- 2005 257 785
- KR-Y1- 200 380 264
- US-A- 3 145 254
- US-B1- 6 585 372
- US-B1- 6 969 173

## Description

### TECHNICAL FIELD

The present invention relates to a coupling structure of glasses frames and glasses legs, and more particularly, to a coupling structure of glasses frames and glasses legs, in which the frames and the legs can be easily coupled or uncoupled to/from each other, which enables lenses to be easily coupled to the frames, and which provides elasticity when the legs are folded or unfolded.

### BACKGROUND ART

In general, frames of eyeglasses consists of lenses coupling frames and temple bars that are legs rotatably coupled to an end piece of the frames, in which the frames and temple bars are manufactured of as a plastic or metal material.

The frames and legs that consist of the frames are typically coupling with screws and configured to be folded or unfolded, and include elastic means to make it easier to fold or unfold by applying elasticity when folded or unfolded.

Of course, the elastic means are installed to the legs in a complex structure, and the legs are coupled to the frames with screws, and thus they are not easily separated.

US patent US3145254 A describes a spectacle frame as defined in the preamble of claims 1 and 2.

### DETAILED DESCRIPTION OF THE INVENTION

### TECHNICAL PROBLEM

However, as mentioned above, if glasses frames and legs are used by being coupled with screws, an operation of fitting a lens into the frames is complex, and a structure of applying elasticity to the legs is too complex to manufacture, which problematically causes a reduction in manufacturing efficiency.

Therefore, to solve the above problem, the present invention provides a coupling structure of glasses frames and glasses legs, which facilitates assembly and removal of the frames, provides elasticity when the legs are folded and unfolded, and maximizes manufacturing efficiency of the frames.

### TECHNICAL SOLUTION

According to an aspect of the present invention, there is provided a spectacle frame, as defined in claim 1, comprising a front frame, legs, and a coupling structure of glasses frames and glasses legs including two hinge pieces tightly inserted in end pieces split at a distal end of the frames such that the hinge piece protrudes, wherein the hinge piece has a stopper groove; two elastic members having a slot for the insertion of the hinge piece; and legs having a rotation pin and an operating slot such that a front end of the legs can be fitted into the stopper groove while elastically pressing the elastic member.

According to another aspect of the present invention, there is provided a spectacle frame, as defined in claim 2, comprising a front frame, legs, and a coupling structure of glasses frames and glasses legs including: two hinge pieces protruding from the inside of an end piece integrally formed with an end of the frames by synthetic-resin injection-molding, wherein the hinge piece has a stopper groove; two elastic members having an upper plate and a lower plate, wherein an intermediate portion of the upper plate is elastically bent, the upper plate and the lower plate have respective slots to be doubly fitted onto the hinge piece, and the intermediate portion of the upper plate is bent at a predetermined angle to form a protrusion in the horizontal direction; and a leg, the front end of which has a rotation pin such that the front end of the leg can be fitted into the stopper groove of the hinge piece while elastically pressing the upper plate of the elastic member, wherein the leg has a relatively vertically elongate operating slot at the front end thereof such that the legs is rotatable about the rotation pin.

In both aspect, each elastic member further comprises a protrusion which is bent at a predetermined angle in the middle of both sides of the upper plate slot, such that, when the leg is folded or unfolded, a force resisting to fold or unfold the leg is applied before the leading portions passe the protrusions, and an elastic force to fold or unfold the leg is applied after passing the protrusions so that a state in which the leg is folded or unfolded is maintained.

### ADVANTAGEOUS EFFECTS

As mentioned above, the present invention relates to assembly of glasses frames by fitting an elastic member and glasses legs into hinge pieces formed in end pieces of the frames, which is easy to assemble and disassemble the frames and accordingly improves the manufacturing efficiency of the frames .

### DESCRIPTION OF THE DRAWINGS

FIG. 1 is an exploded perspective view of a coupling structure of glasses frames and glasses legs according to an embodiment of the present invention;
FIG. 2 is an assembled perspective view of a coupling structure of glasses frames and glasses legs according to an embodiment of the present invention;
FIG. 3 is an enlarged view of a folded state of glasses legs according to an embodiment of the present invention;
FIG. 4 is a cross-sectional view of an unfolded state of glasses legs according to an embodiment of the present invention;
FIG. 5 is an exploded perspective view of a second embodiment of the present invention in which a stopper groove is different;
FIG. 6 is an assembled perspective view of the second embodiment of the present invention;
FIG. 7 is an enlarged view of a folded state of glasses legs according to the second embodiment of the present invention;
FIG. 8 is a cross-sectional view of an unfolded state of glasses legs according to the second embodiment of the present invention;
FIG. 9 is an exploded perspective view of a third embodiment of the present invention in which glasses frames are different; and
FIG. 10 is an exploded perspective view of a fourth embodiment of the present invention in which a hinge piece of the third embodiment is different.

### - Explanation of Reference Numerals -

1: stopper groove 2: hinge piece
3: slot 3-1: slot of lower plate
3-2: slot of upper plate 4: elastic member
5: operating slot 6: protrusion
7: leading portion 8: rotation pin

### MODE OF THE INVENTION

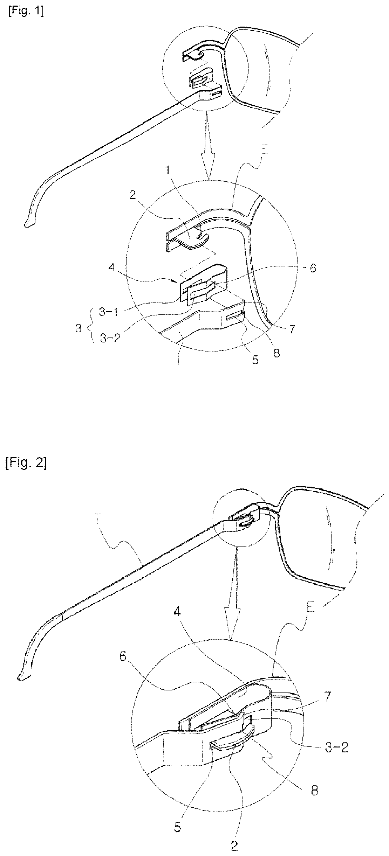

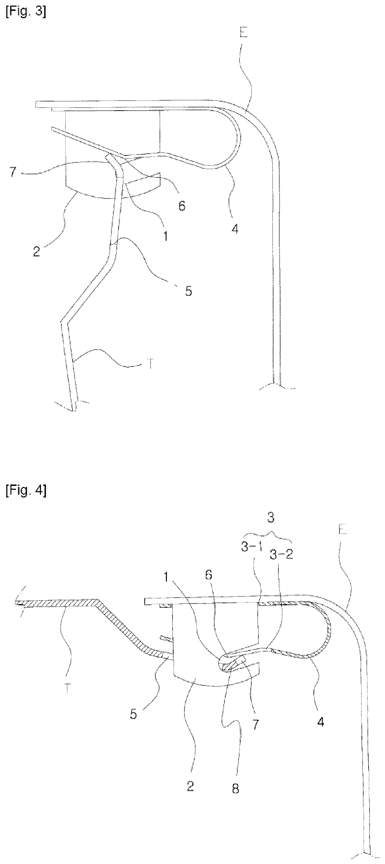

As shown in FIGS. 1 through 4, the present invention provides a hinge piece (2) tightly inserted between end pieces (E) split at a distal end of the frames such that the hinge piece (2) protrudes, wherein the hinge piece (2) has a stopper groove (1) ; an elastic member (4) having an upper plate and a lower plate, wherein an intermediate portion of the upper plate is elastically bent, the upper plate and the lower plate have respective slots (3) to be doubly fitted onto the hinge piece (2), and the intermediate portion of the upper plate is bent at a predetermined angle to form a protrusion (6) in the horizontal direction; and a leg (T), the front end of which has a rotation pin (8) such that the front end of the leg (T) can be fitted into the stopper groove (1) of the hinge piece (2) while elastically pressing the upper plate of the elastic member (4), wherein the leg (T) has a relatively vertically elongate operating slot (5) at the front end thereof such that the legs (T) is rotatable about the rotation pin (8).

In this regard, the elastic member (4) is bent with the middle of a long formed plate material having elasticity so that the slots 3 are respectively formed in the upper plate of a top portion and the lower plate of a bottom portion, in which a lower plate slot 3-1 is formed to allow the split hinge piece 2 to be tightly inserted so that the hinge piece 2 can be fixed, and an upper plate slot 3-2 is formed to be slightly larger than the hinge piece 2 so that the hinge piece 2 can be easily inserted and separated.

That is, the slot 3-1 of the lower plate of the bottom portion functions to fix the hinge piece 2.

The hinge piece 2 is respectively in each of the split end pieces E and is in close contact with the end pieces E when closely contacting the end pieces E.

Also, protrusions 6 that are bent at a predetermined angle in the middle of both sides of the upper plate slot 3-2 are formed in the elastic member 4 to give intermittent when the leg T is folded or unfolded. A leading portion 7 that moves along the protrusion 6, gives intermittent when the leg T is folded or unfolded at a certain angle, and is bent at a predetermined angle is formed on a leading part of the leg T.

That is, when the leg T is folded or unfolded, if the leading portion 7 moves along the protrusion 6 at an angle greater than a certain angle, the leg T is rapidly folded or unfolded due to an action of a spring force.

In particular, the stopper groove 1 of the hinge piece 2 is formed to have an entrance disposed downward rather than inward in which the rotation pin 8 is disposed so that the rotation pin 8 of the leg T may not be removed when fitted into the stopper groove 1.

In the above-described present invention, if the elastic member 4 is fitted into the hinge piece 2, the lower plate slot 31 is first fitted and is seated in the end piece E, and the upper plate slot 3-2 is fitted into an upper end portion of the hinge piece 2 so that the elastic member 4 may elastically move up and down. In this state, if an upper plate of the elastic member 4 is pressed toward the leading portion 7 of the leg T, the slot 1 of the hinge piece 2 is exposed above the upper plate. If the rotation pin 8 is inserted into the stopper groove 1 in a state where the hinge piece 2 passes through between the operating slot 5 of the leg T, the leg T is rotatably movable with respect to the rotation pin 8 and the stopper groove 1.

Also, in the present invention, if the leg T rotatably moves, when the leading portions 7 protruding from both sides of the rotation pin 8 pass the protrusions 6 of the upper plate of the elastic member 4, the spring force rapidly increases and decreases, and thus the leg T is rapidly folded or unfolded. Since a direction of the spring force influencing the leading portion 7 of the leg T is changed by passing the protrusions 6, a force resisting to fold or unfold the leg T is applied before passing the protrusions 6, and an elastic force to fold or unfold the leg T is applied after passing the protrusions 6 so that a state in which the leg T is folded or unfolded is maintained.

In particular, an operation of coupling the leg T to the glasses frame merely inserts the rotation pin 8 of the leg T into the stopper groove 1 having the entrance exposed by merely fitting and pressing the elastic member 4 into the hinge piece 2, thereby very simply and effectively assembling the glasses frame.

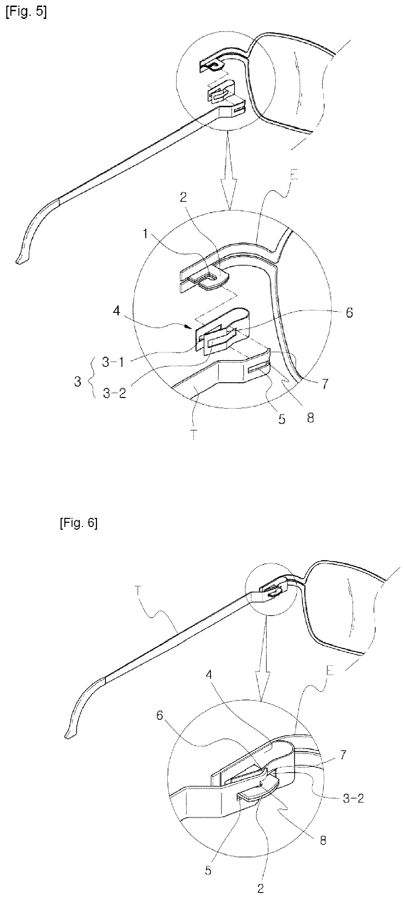

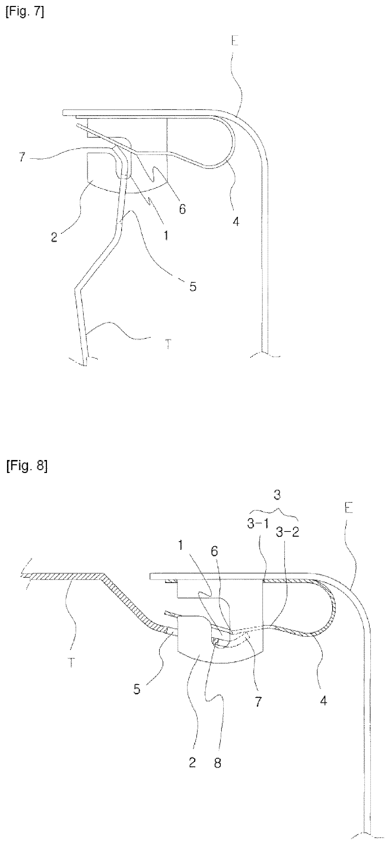

Meanwhile, in the present invention, as shown in FIGS. 1 through 4, the entrance of the stopper groove 1 formed in the hinge piece 2 is formed forward the glasses such that the rotation pin 8 of the leg T may be fitted in the front of the hinge piece 2. As shown in FIGS. 5 through 8, the entrance of the stopper groove 1 formed in the hinge piece 2 is formed backward the glasses such that the rotation pin 8 of the leg T may be fitted in the rear of the hinge piece 2.

In particular, in a case of the embodiment in which the entrance of the stopper groove 1 is formed to open backward, the entrance of the stopper groove 1 may be formed closer to a lower end of the hinge piece 2 than inward of the stopper groove 1 in which the rotation pin 8 is disposed such that the rotation pin 8 of the leading part of the leg T engaged into the stopper groove 1 is not easily escaped.

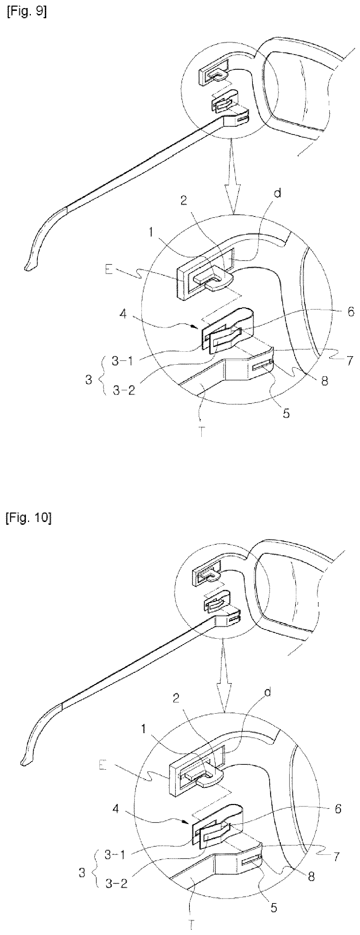

Meanwhile, FIG. 9 shows another embodiment of the present invention in which glasses frames are formed in a synthetic resin injection. The end piece E and the hinge piece 2 can be integrally formed by injection, and a groove d is formed around the hinge piece 2 in an inner side of the end piece E.

In the above-described other embodiment of the present invention, the elastic member 4 is fitted into the hinge piece 2 by the stopper groove 3 so that a lower plate of the elastic member 4 is fitted into the groove d of the end piece E.

Also, FIG. 10 shows another embodiment in which the hinge piece 2 is formed of metal in the above other embodiment of the present invention, in which a coupling groove is formed in the end piece E during injection, a stopper protrusion is formed in a lower end of the hinge piece 2 so that the hinge piece 2 may be coupled by pressing the hinge piece 2 into the coupling groove after injection, and the lower end of the hinge piece 2 may be buried with injection resin and coupled to the end piece E during injection of the glasses frame.

In the above-described other embodiments of the present invention, the end piece E and the hinge piece 2 of the glasses frame are integrally formed and thus a joint part of the leg T is not disconnected.

## Claims

1. A spectacle frame comprising a front frame, legs (T), and a coupling structure mounted between the front frame and the legs (T) for hingedly coupling the front frame and the legs (T), the front frame comprising at each of its lateral ends a split end piece (E), the coupling structure comprising:
two hinge pieces (2), wherein each hinge piece (2) is tightly inserted between the two portions of the split end piece (E) such that each hinge piece (2) protrudes, wherein each hinge piece (2) has a stopper groove (1);
two elastic members (4) each formed from a plate material and bent to a substantially U-shape with an upper plate, a lower plate and a middle having elasticity, each elastic member (4) having slots (3-1, 3-2) formed in the lower plate and the upper plate respectively, each elastic member (4) beinglocatedbetween a respective front end of the leg (T) and a respective end piece (E) of the front frame where a respective hinge piece (2) is retained, with the upper plate abutting the front end of the leg (T) and the lower plate abutting the end piece (E) of the front frame, such that the hinge piece (2) is inserted through the slots (3-1, 3-2); and
a rotation pin (8) and an operating slot (5) formed at the front end of each leg (T), the hinge piece (2) passing through between the operating slot (5) and the rotation pin (8) being inserted into the stopper groove (1) which is oriented in parallel to the longitudinal direction of the legs (T) and substantially perpendicular to the rotation pin (8), so that the legs (T) are rotatable about the rotation pin (8), a leading portion (7) of each leg (T) bent at a predetermined angle protruding from both sides of the rotation pin (8), the leading portion (7) being disposed in sliding engagement with the upper plate of the elastic member (4) and elastically pressing the elastic member (4);
**characterized by** the fact each elastic member (4) further comprises a protrusion (6) which is bent at a predetermined angle in the middle of both sides of the upper plate slot (3-2), such that, when the leg (T) is folded or unfolded, a force resisting to foldorunfoldthe leg (T) is applied before the leading portions (7) pass the protrusions (6), and an elastic force to fold or unfold the leg (7) is applied after passing the protrusions (6) so that a state in which the leg (T) is folded or unfolded is maintained.

2. A spectacle frame comprising a front frame, legs (T), and a coupling structure mounted between the front frame and the legs (T) for hingedly coupling the front frame and the legs (T), the coupling structure comprising:
two hinge pieces (2), wherein each hinge piece (2) protrudes from the inside of an end piece (E) and is integrally formed with the end piece (E) at a distal end of the front frame by synthetic-resin injection-molding, wherein each hinge piece (2) has a stopper groove (1);
two elastic members (4) each formed from a plate material and bent to a substantially U-shape with an upper plate, a lower plate and a middle having elasticity, each elastic member (4) having slots (3-1, 3-2) formed in the lower plate and the upper plate respectively, each elastic member (4) being located between a respective front end of the leg (T) and a respective end piece (E) of the front frame where a respective hinge piece (2) is retained, with the upper plate abutting the front end of the leg (T) and the lower plate abutting the end piece (E) of the front frame, such that the hinge piece (2) is inserted through the slots (3-1, 3-2); and
a rotation pin (8) and an operating slot (5) formed at the front end of each leg (T), the hinge piece (2) passing through between the operating slot (5) and the rotation pin (8) being inserted into the stopper groove (1) which is oriented in parallel to the longitudinal direction of the legs (T) and substantially perpendicular to the rotation pin (8), so that the legs (T) are rotatable about the rotation pin (8), a leading portion (7) of each leg (T) bent at a predetermined angle protruding from both sides of the rotation pin (8), the leading portion (7) being disposed in sliding engagement with the upper plate of the elastic member (4) and elastically pressing the elastic member (4); **characterized by** the fact each elastic member (4) further comprises a protrusion (6) which is bent at a predetermined angle in the middle of both sides of the upper plate slot (3-2), such that, when the leg (T) is folded or unfolded, a force resisting to foldorunfoldthe leg (T) is applied before the leading portions (7) pass the protrusions (6), and an elastic force to fold or unfold the leg (7) is applied after passing the protrusions (6) so that a state in which the leg (T) is folded or unfolded is maintained.

3. The spectacle frame of anyone of claims 1 and 2, wherein an entrance of the stopper groove (1) of the hinge piece (2) is formed to open forward.

4. The spectacle frame of anyone of claims 1 and 2, wherein an entrance of the stopper groove (1) of the hinge piece (2) is formed to open backward.

5. The spectacle frame of claim 4, wherein the entrance of the stopper groove (1) is formed closer to a lower end of the hinge piece (2) than inward of the stopper groove (1) in which the rotation pin (8) is disposed.

6. The spectacle frame of claim 2, wherein the hinge piece (2) is formed of metal, a coupling groove being formed in the end piece (E) during injection and a stopper protrusion being formed in a lower end of the hinge piece (2), so that the hinge piece (2) is coupled to the end piece (E) by pressing the stopper protrusion into the coupling groove after injection, and the lower end of the hinge piece (2) having been buried with injection resin and coupled to the end piece (E) during injection of the frame.

7. The spectacle frame of claim 2, wherein the hinge piece (2) and the end piece (E) are formed of the same synthetic resin.

## Patentansprüche

1. Brillengestell, einen vorderen Rahmen, Bügel (T) und eine Kopplungsstruktur umfassend, die zwischen den vorderen Rahmen und die Bügel (T) montiert ist, um den vorderen Rahmen und die Bügel (T) gelenkig zu koppeln, wobei der vordere Rahmen an jedem seiner seitlichen Enden ein gespaltenes Endstück (E) umfasst, wobei die Kopplungsstruktur Folgendes umfasst:
zwei Gelenkstücke (2), wobei jedes Gelenkstück (2) straff zwischen den zwei Abschnitten des gespaltenen Endstücks (E) derart eingesetzt ist, dass jedes Gelenkstück (2) hervorsteht, wobei jedes Gelenkstück (2) eine Anschlagaussparung (1) aufweist,
zwei elastische Elemente (4), die jeweils aus einem Plattenmaterial gebildet und im Wesentlichen zu einer U-Form mit einer oberen Platte, einer unteren Platte und einer Mitte mit Elastizität gebogen sind, wobei jedes elastische Element (4) Schlitze (3-1, 3-2) aufweist, die in der unteren Platte beziehungsweise der oberen Platte gebildet sind, wobei jedes elastische Element (4) zwischen einem entsprechenden vorderen Ende des Bügels (T) und einem entsprechenden Endstück (E) des vorderen Rahmens angeordnet ist, wo ein entsprechendes Gelenkstück (2) gehalten wird, wobei die obere Platte am vorderen Ende des Bügels (T) anliegt und die untere Platte am Endstück (E) des vorderen Rahmens anliegt, so dass das Gelenkstück (2) durch die Schlitze (3-1, 3-2) eingesetzt ist, und
einen Drehstift (8) und einen Funktionsschlitz (5), die am vorderen Ende jedes Bügels (T) gebildet sind, wobei das Gelenkstück (2) zwischen dem Funktionsschlitz (5) und dem Drehstift (8) hindurch verläuft, der in die Anschlagaussparung (1) eingesetzt ist, die parallel zur Längsrichtung der Bügel (T) und im Wesentlichen senkrecht zum Drehstift (8) ausgerichtet ist, so dass die Bügel (T) um den Drehstift (8) drehbar sind, wobei ein vorderer Abschnitt (7) jedes Bügels (T), der in einem festgelegten Winkel gebogen ist, an beiden Seiten über den Drehstift (8) hinausragt, wobei der vordere Abschnitt (7) in gleitendem Eingriff mit der oberen Platte des elastischen Elements (4) angeordnet ist und elastisch auf das elastische Element (4) drückt,
**gekennzeichnet durch** die Tatsache, dass jedes elastische Element (4) ferner eine Auskragung (6) umfasst, die in einem festgelegten Winkel in der Mitte beider Seiten des oberen Plattenschlitzes (3-2) derart gebogen ist, das beim Auf- und Zuklappen des Bügels (T) eine Kraft ausgeübt wird, die dem Auf- oder Zuklappen des Bügels (T) entgegenwirkt, bevor die vorderen Abschnitte (7) durch die Auskragungen (6) verlaufen, und nach dem Durchlaufen der Auskragungen (6) eine elastische Kraft zum Auf- oder Zuklappen des Bügels (7) ausgeübt wird, so dass ein Zustand, in dem der Bügel (T) auf- oder zugeklappt ist, aufrechterhalten wird.

2. Brillengestell, einen vorderen Rahmen, Bügel (T) und eine Kopplungsstruktur umfassend, die zwischen den vorderen Rahmen und die Bügel (T) montiert ist, um den vorderen Rahmen und die Bügel (T) gelenkig zu koppeln, wobei die Kopplungsstruktur Folgendes umfasst:
zwei Gelenkstücke (2), wobei jedes Gelenkstück (2) aus der Innenseite eines Endstücks (E) hervorragt und durch Kunststoffharz-Spritzgießen einstückig mit dem Endstück (E) eines entfernten Endes des vorderen Rahmens gebildet ist, wobei jedes Gelenkstück (2) eine Anschlagaussparung (1) aufweist,
zwei elastische Elemente (4), die jeweils aus einem Plattenmaterial gebildet und im Wesentlichen zu einer U-Form mit einer oberen Platte, einer unteren Platte und einer Mitte mit Elastizität gebogen sind, wobei jedes elastische Element (4) Schlitze (3-1, 3-2) aufweist, die in der unteren Platte beziehungsweise der oberen Platte gebildet sind, wobei jedes elastische Element (4) zwischen einem entsprechenden vorderen Ende des Bügels (T) und einem entsprechenden Endstück (E) des vorderen Rahmens angeordnet ist, wo ein entsprechendes Gelenkstück (2) gehalten wird, wobei die obere Platte am vorderen Ende des Bügels (T) anliegt und die untere Platte am Endstück (E) des vorderen Rahmens anliegt, so dass das Gelenkstück (2) durch die Schlitze (3-1, 3-2) eingesetzt ist, und
einen Drehstift (8) und einen Funktionsschlitz (5), die am vorderen Ende jedes Bügels (T) gebildet sind, wobei das Gelenkstück (2) zwischen dem Funktionsschlitz (5) und dem Drehstift (8) hindurch verläuft, der in die Anschlagaussparung (1) eingesetzt ist, die parallel zur Längsrichtung der Bügel (T) und im Wesentlichen senkrecht zum Drehstift (8) ausgerichtet ist, so dass die Bügel (T) um den Drehstift (8) drehbar sind, wobei ein vorderer Abschnitt (7) jedes Bügels (T), der in einem festgelegten Winkel gebogen ist, an beiden Seiten über den Drehstift (8) hinausragt, wobei der vordere Abschnitt (7) in gleitendem Eingriff mit der oberen Platte des elastischen Elements (4) angeordnet ist und elastisch auf das elastische Element (4) drückt,
**gekennzeichnet durch** die Tatsache, dass jedes elastische Element (4) ferner eine Auskragung (6) umfasst, die in einem festgelegten Winkel in der Mitte beider Seiten des oberen Plattenschlitzes (3-2) derart gebogen ist, das beim Auf- und Zuklappen des Bügels (T) eine Kraft ausgeübt wird, die dem Auf- oder Zuklappen des Bügels (T) entgegenwirkt, bevor die vorderen Abschnitte (7) durch die Auskragungen (6) verlaufen, und nach dem Durchlaufen der Auskragungen (6) eine elastische Kraft zum Auf- oder Zuklappen des Bügels (7) ausgeübt wird, so dass ein Zustand, in dem der Bügel (T) auf- oder zugeklappt ist, aufrechterhalten wird.

3. Brillengestell nach einem der Ansprüche 1 und 2, wobei ein Einlass der Anschlagaussparung (1) des Gelenkstücks (2) derart gebildet ist, dass er sich nach vorn öffnet.

4. Brillengestell nach einem der Ansprüche 1 und 2, wobei ein Einlass der Anschlagaussparung (1) des Gelenkstücks (2) derart gebildet ist, dass er sich nach hinten öffnet.

5. Brillengestell nach Anspruch 4, wobei der Einlass der Anschlagaussparung (1) näher an einem unteren Ende des Gelenkstücks (2) als einwärts der Anschlagaussparung (1) gebildet ist, in welcher der Drehstift (8) angeordnet ist.

6. Brillengestell nach Anspruch 2, wobei das Gelenkstück (2) aus Metall gebildet ist, während des Spritzgießens eine Kopplungsaussparung in dem Endstück (E) gebildet wird und in einem unteren Ende des Gelenkstücks (2) eine Anschlagauskragung gebildet wird, so dass das Gelenkstück (2) mit dem Endstück (E) gekoppelt wird, indem die Anschlagauskragung nach dem Spritzgießen in die Kopplungsaussparung gepresst wird und das untere Ende des Gelenkstücks (2) in Spritzgussharz eingebettet und während des Spritzgießens des Rahmens mit dem Endstück (E) gekoppelt wird.

7. Brillengestell nach Anspruch 2, wobei das Gelenkstück (2) und das Endstück (E) aus dem gleichen Kunstharz gebildet sind.

## Revendications

1. Monture de lunettes comprenant une monture avant, des branches (T) et une structure de couplage montée entre la monture avant et les branches (T) pour coupler la monture avant et les branches (T) de manière articulée, la monture avant comprenant, à chacune de ses extrémités latérales, une pièce d'extrémité fendue (E), la structure de couplage comprenant :
deux pièces d'articulation (2), chaque pièce d'articulation (2) étant insérée étroitement entre les deux parties de la pièce d'extrémité fendue (E) de telle sorte que chaque pièce d'articulation (2) fait saillie, chaque pièce d'articulation (2) ayant une rainure de butée (1) ;
deux éléments élastiques (4) formés à partir d'un matériau en plaque et courbés sensiblement en forme de U avec une plaque supérieure, une plaque inférieure et un milieu ayant une élasticité, chaque élément élastique (4) ayant des fentes (3-1, 3-2) formées dans la plaque inférieure et la plaque supérieure, respectivement, chaque élément élastique (4) étant situé entre une extrémité avant respective de la branche (T) et une pièce d'extrémité respective (E) de la monture avant où une pièce d'articulation respective (2) est retenue, avec la plaque supérieure s'appuyant sur l'extrémité avant de la branche (T) et la plaque inférieure s'appuyant sur la pièce d'extrémité (E) de la monture avant, de telle sorte que la pièce d'articulation (2) est insérée à travers les fentes (3-1, 3-2) ; et
une broche de rotation (8) et une fente d'actionnement (5) formées à l'extrémité avant de chaque branche (T), la pièce d'articulation (2) passant entre la fente d'actionnement (5) et la broche de rotation (8) étant insérée dans la rainure de butée (1) qui est orientée parallèlement à la direction longitudinale des branches (T) et sensiblement perpendiculairement à la broche de rotation (8), de telle sorte que les branches (T) sont aptes à tourner autour de la broche de rotation (8), une partie avant (7) de chaque branche (T) courbée à un angle prédéterminé faisant saillie des deux côtés de la broche de rotation (8), la partie avant (7) étant disposée en engagement coulissant avec la plaque supérieure de l'élément élastique (4) et pressant élastiquement l'élément élastique (4) ;
**caractérisée par le fait que** chaque élément élastique (4) comprend en outre une saillie (6) qui est courbée à un angle prédéterminé au milieu des deux côtés de la fente de plaque supérieure (3-2), de telle sorte que, lorsque la branche (T) est pliée ou dépliée, une force résistant au pliage ou au dépliage de la branche (T) est appliquée avant que les parties avant (7) ne passent les saillies (6), et une force élastique pour plier ou déplier la branche (T) est appliquée après le passage par les saillies (6) de telle sorte qu'un état dans lequel la branche (T) est pliée ou dépliée est maintenu.

2. Monture de lunettes comprenant une monture avant, des branches (T) et une structure de couplage montée entre la monture avant et les branches (T) pour coupler la monture avant et les branches (T) de manière articulée, la structure de couplage comprenant :
deux pièces d'articulation (2), chaque pièce d'articulation (2) faisant saillie depuis l'intérieur d'une pièce d'extrémité (E) et étant formée d'un seul tenant avec la pièce d'extrémité (E) à une extrémité distale de la monture avant par moulage par injection de résine synthétique, chaque pièce d'articulation (2) ayant une rainure de butée (1) ;
deux éléments élastiques (4) formés chacun à partir d'un matériau en plaque et courbés sensiblement en forme de U avec une plaque supérieure, une plaque inférieure et un milieu ayant une élasticité, chaque élément élastique (4) ayant des fentes (3-1, 3-2) formées dans la plaque inférieure et la plaque supérieure, respectivement, chaque élément élastique (4) étant situé entre une extrémité avant respective de la branche (T) et une pièce d'extrémité respective (E) de la monture avant où une pièce d'articulation respective (2) est retenue, avec la plaque supérieure s'appuyant sur l'extrémité avant de la branche (T) et la plaque inférieure s'appuyant sur la pièce d'extrémité (E) de la monture avant, de telle sorte que la pièce d'articulation (2) est insérée à travers les fentes (3-1, 3-2) ; et
une broche de rotation (8) et une fente d'actionnement (5) formées à l'extrémité avant de chaque branche (T), la pièce d'articulation (2) passant entre la fente d'actionnement (5) et la broche de rotation (8) étant insérée dans la rainure de butée (1) qui est orientée parallèlement à la direction longitudinale des branches (T) et sensiblement perpendiculairement à la broche de rotation (8), de telle sorte que les branches (T) sont aptes à tourner autour de la broche de rotation (8), une partie avant (7) de chaque branche (T) courbée à un angle prédéterminé faisant saillie des deux côtés de la broche de rotation (8), la partie avant (7) étant disposée en engagement coulissant avec la plaque supérieure de l'élément élastique (4) et pressant élastiquement l'élément élastique (4) ;
**caractérisée par le fait que** chaque élément élastique (4) comprend en outre une saillie (6) qui est courbée à un angle prédéterminé au milieu des deux côtés de la fente de plaque supérieure (3-2), de telle sorte que, lorsque la branche (T) est pliée ou dépliée, une force résistant au pliage ou au dépliage de la branche (T) est appliquée avant que les parties avant (7) ne passent les saillies (6), et une force élastique pour plier ou déplier la branche (T) est appliquée après le passage par les saillies (6) de telle sorte qu'un état dans lequel la branche (T) est pliée ou dépliée est maintenu.

3. Monture de lunettes selon l'une quelconque des revendications 1 et 2, dans laquelle une entrée de la rainure de butée (1) de la pièce d'articulation (2) est formée pour s'ouvrir vers l'avant.

4. Monture de lunettes selon l'une quelconque des revendications 1 et 2, dans laquelle une entrée de la rainure de butée (1) de la pièce d'articulation (2) est formée pour s'ouvrir vers l'arrière.

5. Monture de lunettes selon la revendication 4, dans laquelle l'entrée de la rainure de butée (1) est formée plus près d'une extrémité inférieure de la pièce d'articulation (2) que vers l'intérieur de la rainure de butée (1) dans laquelle la broche de rotation (8) est disposée.

6. Monture de lunettes selon la revendication 2, dans laquelle la pièce d'articulation (2) est formée de métal, une rainure de couplage étant formée dans la pièce d'extrémité (E) pendant l'injection et une saillie de butée étant formée dans une extrémité inférieure de la pièce d'articulation (2), de telle sorte que la pièce d'articulation (2) est couplée à la pièce d'extrémité (E) en pressant la saillie de butée dans la rainure de couplage après l'injection, et l'extrémité inférieure de la pièce d'articulation (2) ayant été noyée avec une résine d'injection et couplée à la pièce d'extrémité (E) pendant l'injection de la monture.

7. Monture de lunettes selon la revendication 2, dans laquelle la pièce d'articulation (2) et la pièce d'extrémité (E) sont formées de la même résine synthétique.
